# EUROPÄISCHE PATENTSCHRIFT

(11) **EP 2 805 366 B1**
(45) Veröffentlichungstag und Bekanntmachung des Hinweises auf die Patenterteilung: **24.08.2016**
(21) Anmeldenummer: 13700904.9
(22) Anmeldetag: 21.01.2013
(51) Int. Cl.: H01M 2/16, H01M 10/0525, C08K 3/22, C09D 153/00, H01M 2/14

(54) **SEPARATOR UMFASSEND EINE PORÖSE SCHICHT UND EIN VERFAHREN ZU SEINER HERSTELLUNG**
SEPARATOR COMPRISING A POROUS LAYER AND A PROCEDURE FOR ITS PREPARATION
SÉPARATEUR COMPRENANT UNE COUCHE POREUSE ET UNE PROCÉDURE DE SA FABRICATION

(30) Priorität: 19.01.2012 DE 102012000910
(43) Veröffentlichungstag der Anmeldung: 26.11.2014
(73) Patentinhaber: Sihl GmbH, 52355 Düren (DE)
(72) Erfinder: GÖTZEN, Klaus, 52391 Vettweiss (DE); NIEMÖLLER, Axel, 52355 Düren Niederau (DE); SCHÄFER, Manfred, 50823 Köln (DE)
(74) Vertreter: f & e patent
(86) Internationale Anmeldenummer: PCT/EP2013/051063
(87) Internationale Veröffentlichungsnummer: WO 2013/107911

(56) Entgegenhaltungen:
- WO-A1-2011/062285
- JP-A- 2004 146 106
- US-A1- 2006 046 149

## Beschreibung

Die vorliegende Erfindung betrifft einen Separator für eine elektrochemische Zelle, vorzugsweise eine Lithium-Ionen-Batterie, umfassend eine poröse Schicht, welche mindestens ein Blockcopolymer mit drei oder mehr Polymerblöcken und mindestens ein Aluminiumoxid oder -hydroxid umfasst, eine Lithium-Ionen-Batterie umfassend solch einen Separator sowie ein Verfahren zur Herstellung eines solchen Separators. Die feinporöse Schicht des Separators enthält mindestens ein Blockcopolymer als Binder und als Hauptbestandteil ein Aluminiumoxid oder -hydroxid, z.B. Boehmit. Separatoren auf Basis einer solchen Schicht zeichnen sich insbesondere durch eine schnelle Flüssigkeitsaufnahme, hohe Porosität, gute mechanische Festigkeit und sehr geringe Schrumpfung unter thermischer Belastung aus. Eine wesentliche Verbesserung der Sicherheit von heute üblichen Lithium-Ionen-Batterien ist damit möglich. Darüber hinaus können die Separatoren auch in einem kommerziellen Maßstab in einem kostengünstigen Beschichtungsverfahren hergestellt werden.

Lithium-Ionen-Batterien sind weit verbreitet, z.B. in Mobiltelefonen, Laptop-Rechnern und elektrisch betriebenen Werkzeugen. In letzter Zeit werden allerdings zunehmend Sicherheitsrisiken derartiger Batterien bekannt, die bis zur explosionsartigen Zerstörung der Batterien führen. Andererseits erscheint die Lithium-Ionen-Technologie für Batterien zukünftiger Elektrofahrzeuge wegen ihrer hohen Energiedichte und Leistung prädestiniert. Eine zwingende Anforderung an die Antriebstechnik künftiger Elektrofahrzeuge sind jedoch kostengünstige und sichere Komponenten.

Separatoren sind poröse Elemente, üblicherweise in Form von Folien, zur Trennung der chemischen Reaktionen an Anode und Kathode in einer Batterie und ein wesentliches Sicherheitselement, um einen Kurzschluss in den Batterien zu verhindern. Aus dem Stand der Technik sind sowohl Separatoren bekannt, die als Beschichtung direkt auf die Anode und/oder die Kathode aufgebracht sind, als auch freitragende Separatoren, die nicht als Beschichtung auf eine der Elektroden aufgebracht sind, sondern ein selbstständiges Bauteil der Batterie darstellen.

Die Anforderungen an einen stabilen, die Sicherheit gewährleistenden Separator sind vielfältig und umfassen eine möglichst geringe Dicke, gute elektrische Isolation bei gleichzeitig hohem lonentransport, hohe Reißfestigkeit und Dehnbarkeit, elektrochemische Stabilität, hohe Porosität bei definiertem Porendurchmesser, gute Benetzbarkeit mit organischen Elektrolyten, chemische wie mechanische Beständigkeit auch bei hohen Temperaturen sowie Dimensionsstabilität.

Bisherige Separatoren bestehen oft aus schmelzbaren Kunststoffen, die entweder zu Folien extrudiert oder gegossen werden. Um feine Poren in diesen Kunststoffen zu erzeugen, werden diese gestreckt, wobei die Kunststoffe aufreißen und eine Porosität von 30-60 % erzeugt wird. Üblich sind Separatoren auf Basis von Polypropylen (Schmelzpunkt ca. 160-165 °C), Polyethylen (Schmelzpunkt ca. 110-135 °C) oder Mischungen derselben. Weiterhin sind poröse Kunststoffseparatoren auf Basis von PVDF (Polyvinylidenfluorid) bspw. aus US 2010/0183907 bekannt.

Ein gravierender Nachteil derartiger Polyolefinseparatoren ist deren geringe thermische Belastbarkeit selbst bei Temperaturen unterhalb von 150 °C. Schon ein temporäres Erreichen des Schmelzpunkts der Polymere führt zu einem Schmelzen des Separators und kann durch die damit verbundene Schrumpfung zu einem Kurzschluss in der elektrochemischen Zelle führen, so dass derartige Separatoren nicht als sicher einzustufen sind.

Bekannt sind ferner auch Separatoren auf Basis anorganischer Vliesstoffe, wie z.B. Vliesen aus Glas- oder Keramikmaterialien oder auch Keramikpapieren. Diese sind zwar temperaturstabil, aber oft mechanisch unbeständig, was die Lebensdauer entsprechender Batterien verkürzt.

Im Stand der Technik wurden diverse Versuche unternommen, die Eigenschaften von Separatoren auf Basis von organischen Polymeren mit denen von Separatoren auf Basis anorganischer Materialien zu kombinieren. So sind bspw. aus dem Stand der Technik Separatoren bekannt, die eine Mischung eines Polymers wie Polyvinylalkohol (PVA) oder Polyvinylidenfluorid (PVDF) und eines anorganisches Pigments, wie bspw. Silika oder Aluminiumoxid, enthalten, bspw. aus US 6,153,337 B1 und US 6,723,467 B2.

Die bisher aus dem Stand der Technik bekannten Separatoren stellen jedoch stets nur einen Kompromiss zwischen den verschiedenen gewünschten Eigenschaften dar, wie bspw. lonenleitfähigkeit, Festigkeit, Dehnbarkeit, Schrumpfverhalten, Temperaturbeständigkeit, chemischer Inertheit und kostengünstiger Herstellung. So sind bspw. Bindemittel auf PVA-Basis nicht geeignet, langlebige und chemisch inerte Separatoren bereitzustellen. Separatoren mit Bindemitteln auf PVDF-Basis sind zwar chemisch inerter, dafür aber wesentlich teurer in der Herstellung.

Aufgabe der vorliegenden Erfindung war es daher, einen Separator für elektrochemische Zellen bereitzustellen, der eine hohe Porosität, eine hohe Formstabilität / geringe thermische Schrumpfung auch bei Temperaturen oberhalb von 150 °C sowie eine gute mechanische Stabilität, insbesondere eine hohe Reißdehnung, aufweist und dabei kostengünstig sowohl als freitragender Separator als auch als Elektrodenbeschichtung hergestellt werden kann.

Diese Aufgabe wird gelöst durch den Separator und das Verfahren zur Herstellung eines Separators der vorliegenden Erfindung.

Die vorliegende Erfindung betrifft einen Separator für eine elektrochemische Zelle, vorzugsweise eine Lithium-Ionen-Batterie, umfassend eine poröse Schicht, welche ein Blockcopolymer mit drei oder mehr Polymerblöcken und ein Aluminiumoxid oder -hydroxid umfasst, wobei das Gewichtsverhältnis von Aluminiumoxid oder -hydroxid zu Blockcopolymer im Bereich von 1,5:1 bis 20:1 liegt.

Bevorzugt liegt das Gewichtsverhältnis von Aluminiumoxid oder -hydroxid zu Blockcopolymer im Bereich von 1,75:1 bis 20:1, weiterhin bevorzugt von 2:1 bis 20:1, besonders bevorzugt von 2,25:1 bis 10:1 und insbesondere von 2,5:1 bis 8:1.

Überraschenderweise wurde gefunden, dass sich die erfindungsgemäßen Separatoren, die eine derartige Schicht enthalten bzw. aus dieser bestehen, durch eine hohe Porosität, eine hohe Formstabilität / geringe thermische Schrumpfung auch bei Temperaturen oberhalb von 150 °C sowie eine hohe Reißdehnung von mindestens 5% auszeichnen. Dies ist umso überraschender, als da diese Eigenschaften, jedenfalls in Kombination, mit den aus dem Stand der Technik bekannten Bindersystemen auf Basis von Polyvinylalkohol, statistischen Copolymeren oder Diblockcopolymeren nicht erzielt werden können.

Weiterhin zeigen die erfindungsgemäßen Separatoren auch eine schnelle Benetzung ihrer Oberfläche mit Elektrolytlösung und eine schnelle Penetration dieser Elektrolytlösung in den Separator (Flüssigkeitsaufnahme) sowie sehr gute mechanische Eigenschaften, wie Reißfestigkeit und E-Modul nach ASTM 882-02 (ASTM D-638), sowie eine hohe elektrochemische Stabilität.

In der vorliegenden Erfindung ist es somit gelungen, die Vorteile des als Hauptbestandteil eingesetzten Aluminiumoxids/-hydroxids, einer temperaturstabilen porösen anorganische Verbindung, mit denen des Polymers, u.a. der hohen Reißdehnung und der Möglichkeit eines kostengünstigen Herstellungsverfahrens für Separatoren, zu kombinieren.

Ein Schmelzen oder eine Verformung der überwiegend anorganischen porösen Schicht tritt sogar bei Temperaturen bis 150 °C, insbesondere bis 200 °C nicht auf. Somit kann die Sicherheit von Lithiumbatterien durch Verwendung des erfindungsgemäßen Separators erhöht werden.

Der erfindungsgemäße Separator lässt sich mittels bekannter Vorrichtungen, wie bspw. Rollrakel, Luftbürste oder Tiefdruckwalzen, Düsenbeschichtung oder Vorhanggießen, durch das erfindungsgemäße Verfahren kostengünstig herstellen, wobei das Verfahren je nach Anforderung in einfacher Weise variiert und somit speziellen Anforderungen an den jeweiligen Separator angepasst werden kann.

Der Begriff "elektrochemische Zelle" umfasst im Sinne der vorliegenden Erfindung Batterien inklusive Akkumulatoren (Sekundärbatterien) jeder Art, wie bspw. Alkali- und Erdalkali-Batterien, insbesondere Lithium-Ionen-Batterien.

Unter dem Begriff "Block" ist im Sinne der Erfindung ein Abschnitt eines Polymermoleküls zu verstehen, der mehrere identische konstitutionelle Einheiten, (Monomere) umfasst und mindestens ein konstitutionelles oder konfiguratives Merkmal besitzt, das in den unmittelbar angrenzenden Abschnitten (Blöcken) nicht auftritt. Der Begriff Blockcopolymer mit drei Blöcken umfasst im Sinne der Erfindung lineare und sternförmige Polymere mit dem generellen Aufbau (A)ₘ (B)ₙ (C)ₒ, in der A, B und C für die unterschiedlichen Monomere und m, n und o für die Anzahl der Repetiereinheiten in den einzelnen Blöcken stehen. (A)ₘ und (C)ₒ werden in diesem Fall als endständige Blöcke / Endblöcke bezeichnet und können die gleiche oder eine unterschiedliche Monomerzusammensetzung und/oder Molmasse aufweisen (angegeben als Anzahl der Monomereinheiten m und o). (B)ₙ wird als mittelständiger Block / Mittelblock bezeichnet und unterscheidet sich in der Monomerzusammensetzung von den Endblöcken (A)ₘ und (C)ₒ. Jeder der Blöcke (A)ₘ, (B)ₙ und (C)ₒ kann seinerseits wiederum aus einem oder mehreren Homopolymeren, statistischen oder Block-Copolymeren bestehen, wobei statistische Copolymere bevorzugt sind. Der Mittelblock kann wiederum aus mehreren Blöcken bestehen, wodurch Blockcopolymere mit mehr als 3 Blöcken entstehen, z.B. Pentablockcopolymere. Sternförmige Blockcopolymere sind eine spezielle Form verzweigter Blockcopolymere, bei denen von einem Zentrum (C) radial drei oder mehr Ketten der allgemeinen Formel [(A)ₘ (B)ₙ]ₚ ausgehen, wobei (A)ₘ und (B)ₙ wie vorstehend definiert sind und p die Anzahl der Ketten darstellt und die einzelnen Ketten jeweils gleich oder verschieden sein können. Auch diese können als Blockcopolymere in der vorliegenden Erfindung verwendet werden.

Die erfindungsgemäßen Separatoren umfassen sowohl Separatoren, die als Beschichtung direkt auf die Anode und/oder die Kathode aufgebracht sind, als auch freitragende Separatoren, die nicht als Beschichtung auf eine der Elektroden aufgebracht sind, sondern ein selbstständiges Bauteil der Batterie darstellen. In beiden Fällen können die erfindungsgemäßen Separatoren neben der Schicht, die das Blockcopolymer und das Aluminiumoxid oder -hydroxid umfasst, noch weitere Schichten und/oder Materialien enthaltenden, wie bspw. temporäre bzw. permanente Trägermaterialien. Geeignete Trägermaterialien werden im Zusammenhang mit dem erfindungsgemäßen Verfahren beschrieben, nach welchem die erfindungsgemäßen Separatoren sowohl in Form einer Elektrodenbeschichtung als auch als freitragende Separatoren bevorzugt hergestellt werden können. Zur Herstellung einer freitragenden Separatormembran kann die Schicht, die das Blockcopolymer und das Aluminiumoxid oder -hydroxid (im Folgenden auch als Pigment bezeichnet) umfasst, bevorzugt zunächst auf einen temporären Träger aufgebracht werden. Nach Trocknung kann die Beschichtung dann als freitragende, feinporöse Separatorfolie vom temporären Träger abgelöst werden. Weiterhin kann die Schicht auch ein- oder beidseitig auf einen permanenten Träger, bspw. ein Vlies, ein Gewebe oder eine poröse Membran, z.B. einen porösen Polyolefinseparator aufgebracht werden, auf welchem sie bei der Anwendung als Separator verbleibt.

Die Dicke der porösen Schicht, die das Blockcopolymer und das Aluminiumoxid oder -hydroxid umfasst (im Folgenden als poröse Schicht bezeichnet), kann bevorzugt von 1 bis 100 µm, weiterhin bevorzugt von 3 bis 50 µm, besonders bevorzugt von 3 bis 30 µm und insbesondere von 10 bis 20 µm betragen. In freitragenden Separatoren, insbesondere in solchen, die ausschließlich aus der erfindungsgemäßen Schicht bestehen und kein weiteres Trägermaterial umfassen, kann die Dicke der porösen Schicht bevorzugt von 10 µm bis 50 µm betragen. Wird der Separator direkt durch Beschichtung auf die Elektrode aufgebracht, so kann die Dicke der porösen Schicht bevorzugt von 3 µm bis 50 µm betragen.

Die Porosität der porösen Schicht, gemessen mittels Quecksilberporosimetrie, beträgt bevorzugt 30% bis 70%, weiterhin bevorzugt 40% bis 60%. Durch den Zusatz geeigneter Pigmente, Dispergiermittel, Bindemittel, Lösungsmittel, Vernetzer und/oder weiteren Hilfsstoffen kann die Porosität in gewissem Rahmen variiert werden: So führt bspw. die Erhöhung des Anteils an Bindemittel in der Regel zu einer geringeren Porosität und höherer mechanischer Festigkeit (Reißdehnung, E-Modul). Durch die Auswahl der Lösungsmittel für die Beschichtungszusammensetzung kann die Trocknung und damit die Ausbildung einer homogenen porösen Struktur beeinflusst werden. Um eine homogene, isotrope Struktur der Beschichtung zu erreichen, sollte es nicht zu Ausfällungen, Bindermigration und Unverträglichkeiten während der Trocknung kommen, was dem Fachmann bekannt ist. Unter einer isotropen Struktur / Porosität wird im Sinne der vorliegenden Erfindung verstanden, dass die Porenstruktur und die Porengröße in der Vergrößerung eines Rasterelektronenmikroskopes über die Fläche und Dicke des Separators gleichmäßig erscheint. Die Porendurchmesser, bestimmt mit Quecksilberporosimetrie (DIN 66133) haben eine möglichst enge Verteilung um einen Mittelwert. Insbesondere ist die Halbwertsbreite in der Porenverteilungskurve kleiner als +/- 30 % der mittleren Porengröße.

Durch den Überschuss an Pigment nach Verdunsten des Lösungsmittels entsteht eine poröse Struktur. Die Gesamtporosität liegt bei 30 Vol.% bis 70 Vol.%, bevorzugt bei 40 Vol.% bis 60 Vol.%

Der Porendurchmesser, auch als Porengröße bezeichnet, ermittelt mit Hilfe der Quecksilberporosimetrie entsprechend DIN 66133, der porösen Schicht beträgt bevorzugt 10 nm bis 300 nm, weiterhin bevorzugt 50 bis 200 nm.

Das Aluminiumoxid oder -hydroxid stellt bevorzugt ein Oxid oder Hydroxid der allgemeinen Formel Al₂O₃* x H₂O mit x von 0 bis 1,5 dar. Besonders bevorzugt beträgt der Wasseranteil x von 0,8 bis 1,3, jeweils bestimmt nach Trocknung des Pigments bei 150 °C für 2 Stunden durch Thermogravimetrie, wobei das Material mit 2 °C pro Minute bis auf mindestens 700 °C, bevorzugt auf 1150 °C aufgeheizt wird. Dies beinhaltet Aluminiumoxide und -hydroxide, die als alpha- oder gamma-Aluminiumoxid/-hydroxid bezeichnet werden und in verschiedenen Kristallmodifikationen vorliegen können, insbesondere als Boehmit, Pseudoboehmit, Diaspor, gamma-Tonerde oder alpha-Aluminiumoxid oder eine amorphe Struktur aufweisen. Die in dem erfindungsgemäßen Verfahren eingesetzten Oxide bzw. Hydroxide können ihrerseits nach verschiedenen Verfahren hergestellt werden und sind auch kommerziell erhältlich. Bevorzugt ist bspw. Boehmit, das in einem Sol-Gel-Verfahren auf eine solche Weise hergestellt wird, dass feine Kristallite erzeugt werden, die zu übergeordneten Strukturen zusammengelagert sind, bspw. mit plättchenförmiger, nadelförmiger oder blockartiger Primärstruktur. Diese Strukturen besitzen eine hohe Porosität und damit eine hohe Oberfläche. Die typische Kristallitgröße, die röntgenographisch ermittelt werden kann, beträgt bevorzugt von 5 bis 200 nm, bevorzugt von 20 bis 100 nm. Zur Messung der Kristallitgröße werden Pulverproben mittels Röntgenstrukturanalyse untersucht (XRD, Siemens D5000 oder Philips X'Pert). Die Kristallitgröße lässt sich aus dem Diffraktogramm (120 Ebene) bestimmen. Die Porosität dieser Primärstrukturen, mittels Quecksilberporosimetrie entsprechend DIN 66133 bestimmt, liegt bevorzugt im Bereich von 0,3 ml/g bis 1,3 ml/g. Die BET-Oberfläche dieser Primärstrukturen liegt bevorzugt im Bereich von 10 m²/g bis 250 m²/g. Zur Messung der BET-Oberflächen werden die Proben zunächst für 3 Stunden bei 550 °C calciniert und anschließend mittels Tieftemperatur-Adsorption von Stickstoff entsprechend der BET-Methode untersucht. Ein geeignetes Instrument ist zum Beispiel ein Micromeritics Gemini 2360. Insbesondere sind blockförmige und plättchenförmige Primärpartikel geeignet. Diese Primärpartikel können zu einer Sekundärstrukur zusammengelagert sein. Die resultierenden Sekundärpartikel haben bevorzugt eine Teilchengröße von 50 nm bis 2000 nm, bevorzugt von 100 nm bis 500 nm.

Darüber hinaus eignen sich Aluminiumoxide und -hydroxide in Partikelform, wie sie z.B. durch Gasphasenprozesse (sog. pyrogenes Aluminiumoxid / fumed alumina), Fällungsprozesse oder Mahlprozesse gewonnen werden können, die dem Fachmann bekannt sind. Dabei entstehen je nach Verfahren unterschiedliche Kristallstukturen oder auch amorphes Aluminiumoxid. Wichtig bei der Auswahl der Pigmente ist deren Teilchenstruktur, die plättchenförmig, nadelförmig oder blockförmig aufgebaut sind und möglichst eine innere Porosität aufweisen. Kugelförmige oder sphärische Teilchen sind nur dann geeignet, wenn sie Sekundärstrukturen aufbauen, die zu einer porösen Pigmentstruktur führen. Ferner ist eine möglichst feinteilige Dispergierbarkeit der Teilchen in einem Lösungsmittel wünschenswert. Weiterhin ist eine möglichst enge Teilchengrößenverteilung wünschenswert. Geeignete Aluminiumoxide/-hydroxide sind kommerziell erhältlich.

Für den Einsatz als Separator in Lithium-Ionen-Batterien ist ferner eine hohe Reinheit des Aluminiumoxids/-hydroxids notwendig. Der Anteils an Verunreinigungen mit anderen Elementen in dem eingesetzten Aluminiumoxid/-hydroxid beträgt daher bevorzugt weniger als 50 ppm, bezogen auf die Pigmentpartikel.

Um ihre Dispergierbarkeit in Lösungsmitteln zu erhöhen, ist die Oberfläche der Aluminiumoxid oder -hydroxidpartikel bevorzugt modifiziert. Dies kann durch Zugabe eines Dispergiermittels erreicht werden, wobei je nach Dispergiermittel und Lösungsmittel dabei eine ionische oder sterische Stabilisierung der Pigmentteilchen überwiegen kann. Stabile Dispersionen ermöglichen die Herstellung von homogen porösen und fehlstellenfreien Separatoren aus den beschriebenen Aluminiumoxiden/-hydroxiden. Für die Kombination mit Blockcopolymeren als Bindemitteln, die in organischen Lösungsmitteln löslich sind, wird die Pigmentoberfläche bevorzugt durch anorganische oder organische Säuren oder durch Silane modifiziert. Diese Säuren können während der Herstellung des Aluminium-oxid/-hydroxid-Pigments, z.B. im Sol-Gel-Prozess oder bei der Vermahlung aufgebracht werden oder nachträglich bei der Dispergierung des getrockneten Pigments eingesetzt werden. Daher ist das Aluminiumoxid- oder -hydroxid bevorzugt modifiziert durch Behandlung mit mindestens einer Substanz, ausgewählt aus der Gruppe, enthaltend carbonsäure- und/oder sulfonsäurehaltige organische Verbindungen, anorganische Säuren, Silane oder Mischungen derselben.

Geeignete ein- oder mehrbasige organische Carbonsäuren oder organische Sulfonsäuren können bspw. bevorzugt verzweigte oder unverzweigte alkylgruppenhaltigen oder alkylarylgruppenhaltigen Säuren umfassen wie bspw. verzweigte und unverzweigte Alkylarylsulfonsäuren, verzweigte und unverzweigte, lineare und zyklische Alkylsulfonsäuren, verzweigte und unverzweigte, lineare und zyklische, aliphatische und aromatische Mono-, Di- und Polycarbonsäuren. Weiterhin geeignet und ebenfalls bevorzugt sind fluorhaltige Säuren, inklusive perfluorierter organischer Säuren, sowie Amidosulfonsäuren.

Beispiele für solche Verbindungen sind Propionsäure, Buttersäure, Pentansäure, Dodecylsäure, Methansulfonsäure, Dodecylsulfonsäure, para-Toluolsulfonsäure (PTS), para-Dodecylbenzolsulfonsäure (DBS), Trifluoressigsäure, Perfluoralkansäuren, Disäuren wie Milchsäure, Polycarbonsäuren wie Polyacrylsäure, oder Polysulfonsäuren wie Polystyrolsulfonsäure.

Eine Verwendung von organischen Säuren mit mehr als 3 C-Atomen führt zu einer verbesserten sterischen Stabilisierung der Partikel in polaren organischen Lösungsmitteln. In wässigen oder alkoholischen Systemen werden kurzkettige organische Säuren oder anorganische Säuren bevorzugt, z.B. Essigsäure, Ameisensäure, Salzsäure, Salpetersäure, Phosphorsäure, Schwefelsäure, Amidosulfonsäure, Flusssäure, Tetrafluoroborsäure, Hexafluorophosphorsäure, Bisoxalatoborsäure, Perchlorsäure, Milchsäure und Zitronensäure.

Bevorzugt werden starke Säuren wie PTS oder DBS eingesetzt, PTS bevorzugt für die Dispergierung in polaren organischen Lösungsmitteln, DBS bevorzugt für die Dispergierung in unpolaren Lösungsmitteln.

Durch eine Variation der Einsatzmenge der organischen Säure kann die Dispergierung optimiert werden. Typische Mengen liegen im Bereich zwischen 1 Gew.-% und 20 Gew.-%, bezogen auf das Gewicht des Pigments. Je größer die Oberfläche des Pigments ist, desto mehr Dispergiermittel sollte im Allgemeinen verwendet werden.

Alternativ kann die Oberfläche der Pigmentpartikel mit Silanen modifiziert werden. Hierzu eignen sich Verbindungen der allgemeinen Formel: SiR¹R²R³R⁴, worin mindestens einer der Reste (R¹) eine Alkoxygruppe darstellt, z.B. Methoxy, Ethoxy, Propoxy etc., so dass durch Umetherung eine Anbindung an die Pigmentoberfläche erfolgen kann. Die Reste R² und R³ können gleich oder verschieden sein und sind bevorzugt ausgewählt aus Alkyl-, Aryl- oder Alkoxygruppen. Der Rest R⁴ stellt bevorzugt eine Alkyl- oder Arylgruppe dar. Bevorzugte Silane sind z.B. Dimethyldimethoxysilan, Methyltrimethoxysilan, Trimethylmethoxysilan, Phenylmethyldimethoxysilan, Phenyltrimethoxysilan, Dodecyltrimethoxysilan, Dodecyldimethylmethoxysilan, 3-Glycidoxypropyl-trimethoxysilan, Vinyltrimethoxysilan und Methylvinyldimethoxysilan, ohne hierauf beschränkt zu sein.

Zur Modifizierung der Pigmentoberfläche mit Silanen gibt es verschiedene Verfahren, die aus dem Stand der Technik bekannt sind, bspw. die Modifikation in alkoholischer oder wässriger Lösung, Modifikation durch Aufsprühen auf das pulverförmige Pigment mit anschließender Hochleistungs-Mischung oder Modifikation in wasserfreier organischer Phase unter Verwendung wasserfreier organischer Lösungsmittel wie z.B. Toluol, Xylol, THF oder weiterer Kohlenwasserstoffe. Das Pigment wird hierbei zunächst vorgetrocknet und anschließend für mehrere Stunden in dem mit Silan versetzten Lösungsmittel zum Rückfluss erhitzt.

Weiterhin können auch Mischungen der vorbeschriebenen Pigmentteilchen verwendet werden.

Das Blockcopolymer mit drei oder mehr Blöcken fungiert als Bindemittel in der porösen Schicht des erfindungsgemäßen Separators. Derartige Blockcopolymere haben sich überraschenderweise als besonders vorteilhaft in der Abbindung der erfindungsgemäß verwendeten Aluminiumoxid- und -hydroxidpigmente erwiesen, so dass eine hohe Porosität und eine hohe Reißdehnung in der porösen Schicht erzielt werden kann. Sie werden auch als thermoplastische Elastomere bezeichnet.

Im Gegensatz zu statistischen Polymeren und Copolymeren weisen diese Blockcopolymere bevorzugt ein ausgeprägtes Verhalten zur Phasentrennung auf. Damit bilden sie Mikrophasen aus, bei der in der Regel die Phase mit geringerem Anteil in der jeweils anderen dispergiert ist. Auch Lamellenstrukturen sind möglich. Die Strukturen hängen hierbei unter anderem von der Größe und Molmasse der Blöcke, den verwendeten Lösungsmitteln und den weiteren in der Beschichtung vorhandenen Komponenten ab, wie bspw. weiteren Polymeren oder Harzen.

Bevorzugt werden Blockcopolymere verwendet, die als mehrphasiges, bspw. zweiphasiges System vorliegen, in dem die endständigen Blöcke eine härtere Phase und die mittelständigen Blöcke eine weichere, d.h. flexiblere Phase bilden. Bevorzugt werden daher Blockcopolymere verwendet, bei denen die endständigen Polymerblöcke eine höhere Glasübergangstemperatur (Tg_{E}) aufweisen als der oder die mittleren Polymerblöcke (Tg_{M}). Tg_{E} beträgt bevorzugt mehr als 70 °C und höchstens 250 °C, bestimmt gemäß ISO 11357-2:1999. Die Glasübergangstemperatur des bzw. der mittleren PolymerblöckeTg_{M} beträgt bevorzugt weniger als 70 °C, weiterhin bevorzugt weniger als 20 °C und besonders bevorzugt weniger als 0 °C und mindestens -80 °C. Damit ist gewährleistet, dass die Endblöcke durch die Phasentrennung eine Phase mit guter Temperaturstabilität in der Separatorschicht bilden und gleichzeitig die Mittelblöcke zur Flexibilität der Separatorschicht beitragen. Diese Art Phasentrennung ist nur mit Blockcopolymeren mit drei oder mehr Blöcken zu erreichen.

Bevorzugt sind der oder die mittelständigen Blockcopolymere weiterhin nicht in typischen Batterieelektrolyten für Lithium-Ionen-Batterien, wie bspw. einer 1:1 Mischung aus Ethylencarbonat und Dimethylcarbonat mit 1 mol/l Lithiumhexafluorophosphat, bei Temperaturen bis 60 °C löslich. Dies bedeutet, dass zur vollständigen Auflösung eines Gramms der Blockcopolymere inklusive der mittelständigen Blöcke mehr als 1 Liter des entsprechenden Lösungsmittels erforderlich wäre.

Das Blockcopolymer weist bevorzugt eine Molmasse, bezogen auf das gesamte Polymer, mehr als 50.000 g/mol (Gewichtsmittel), besonders bevorzugt von mehr als 100.000 g/mol auf. Das Blockcopolymer weist bevorzugt eine enge Molmassenverteilung (einheitliche Molmasse) auf. Die hohe Molmasse ist gleichbedeutend mit einem möglichst geringen Schmelzflussindex nach ISO 1133 dieser Blockcopolymeren. Bevorzugt sind Blockcopolymere mit einem Schmelzflussindex von weniger als 3 g/10 min bei 230 °C (5 kg), bevorzugt weniger als 1 g/10 min. Durch derartige Triblockcopolymere lässt sich die mechanische Festigkeit der Blockcopolymeren stark verbessern.

Die chemische Zusammensetzung der Blockcopolymere ist hierbei in weiten Bereichen variabel. So können auch die einzelnen Polymerblöcke wiederum aus Copolymeren bestehen, insbesondere der Mittelblock. Der Gewichtsanteil aller Endblöcke liegt bevorzugt im Bereich von 10 Gew.-% bis 60 Gew.-%, bevorzugt von 20 Gew.-% bis 40 Gew.-%, bezogen auf das Gesamtgewicht des Blockcopolymers. Bei einem geringeren Anteil ist eine effektive Phasentrennung im Allgemeinen nicht zu erwarten, bei einem deutlich höheren Anteil als 60 Gew.-% überwiegen die Eigenschaften des Endblockes, so dass die elastomeren Eigenschaften des Mittelblockes oder der Mittelblöcke nicht zum Tragen kommen.

Als Monomere sind in den Blöcken der Blockcopolymere folgende Monomereinheiten bevorzugt: Methyl(meth)acrylate, Ethyl(meth)acrylate, n-Propyl(meth)acrylate, n-Butyl(meth)acrylate, tert.-Butyl(meth)acrylate, n-Hexyl(meth)acrylate, 2-Phenoxyethyl(meth)acrylate, Decyl(meth)acrylat, 2-Ethylhexyl(meth)acrylate, Hexyl(meth)acrylate, Hexadecyl(meth)acrylate, Isobutyl(meth)acrylate, Isopropyl(meth)acrylate, Octadecyl(meth)acrylate; Propyl(meth)acrylate, Tetradecyl(meth)acrylate, Vinylbenzoate, Hydroxyethyl(meth)acrylate, Acrylsäure, Methacrylsäure, Crotonsäure, Isocrotonsäure, Maleinsäure, Maleinsäureanhydrid, Styrol, Methylstyrol, Butylstyrol, Propylstyrol, 4-tert.-Butoxystyrol, 4-tert.-Butylstyrol, 2,5-Dimethylstyrol, 2-Methoxystyrol, Ethylen, Propylen, Butylen, Isopren, Butadien, 1-Hexen, Ethylenoxid und Propylenoxid.

Über die Auswahl der Monomere wird die "Unverträglichkeit" der Endblöcke mit dem Mittelblock oder den Mittelblöcken gesteuert, die zur Ausbildung der mehrphasigen Struktur in dem Blockcopolymer führt. Als Mittelblöcke eignen sich insbesondere Polyolefinpolymere oder Polyolefincopolymere. Diese Polymere weisen eine Glastemperatur von unter 70 °C, bevorzugt unter 20 °C und besonders bevorzugt unter 0 °C auf. Als hierzu "unverträgliche" Polymere sind z.B. Polymere aus Monomereinheiten, ausgewählt aus der Gruppe, enthaltend Acrylsäure, Methacrylsäure, Methylmethacrylat, Hydroxyethyl(meth)acrylat, Methylacrylat, alpha-Methylstyrol, Styrol oder 4-tert.-Butylstyrol, geeignet.

Umfassen die Mittelblöcke ein Acrylat mit niedriger Glasübergangstemperatur, z.B. Butylacrylat, eignen sich bspw. Styrol oder Methylmethacrylat als Monomereinheiten für die Endblöcke. Derartige Triblockcopolymere sind bspw. unter dem Handelsnamen Nanostrenght® von Arkema (Colombes, Frankreich) erhältlich. Weitere Beispiele für geeignete Kombinationen sind Blockcopolymere aus Acrylsäure-Ethylen-Acrylsäure, Methylmethacrylat-Ethylenoxid-Methylmethacrylat und auch Triblockcopolymere mit drei verschiedenen Blöcken, wie z. B. Methylmethacrylat-Butadien-Styrol.

Insbesondere können die Endblöcke Styrol-Einheiten enthalten. Beispiele für derartige Triblockpolymere sind Styrol-Isopren-Styrol-Triblockcopolymer (SIS), Styrol-Butadien-Styrol-Triblockcopolymer (SBS), Styrol-Ethylen/Propylen-Styrol-Triblockcopolymer (SEPS), Styrol-Ethylen/Buten-Styrol-Triblockcopolymer (SEBS) oder Styrol-Ethylen/Ethylen/Propylen-Styrol-Triblockcopolymer (SEEPS). Die beiden letzteren Polymere können z.B. durch Hydrierung von ungesättigten Copolymeren aus Isopren und Butadien gewonnen werden. Derartige Polymere sind kommerziell erhältlich, bspw. unter den Handelsnamen Kraton® (Kraton Polymers, Houston, TX, USA), Cariflex® (Kraton Polymers) und Septon® (Kuraray Co. Ltd, Tokyo, Japan). Diblockcopolymere, die ebenfalls unter diesen Bezeichnungen zu erhalten sind, zeigen deutlich geringere mechanische Festigkeit beim Einsatz als Binder für Separatoren als Triblockcopolymere. Es ist also notwendig, dass ein flexibler Mittelblock an zwei oder, im Falle von sternförmigen Blockcopolymeren, mehrere endständige Endblöcke gebunden ist, um gute mechanische Eigenschaften wie eine hohe Reißdehnung und ein hohes E-Modul zu erreichen.

Ein Beispiel für ein geeignetes Pentablockcopolymer wird unter dem Markennamen Nexar® (Kraton Polymers) angeboten. Es besteht aus 5 Blöcken mit dem Aufbau tert.-Butylstyrol-Ethylen/Propylen-sulfoniertes Styrol-Ethylen/Propylen-tert.-Butylstyrol.

Optional kann das Blockpolymer auch vernetzt werden, bspw. vor, während oder nach dem Trocknen der porösen Schicht bei deren Herstellung. Eine Vernetzung des Blockcopolymers kann durch chemische Methoden, z.B. durch den Einbau reaktiver Gruppen in das Blockcopolymer, mit Hilfe eines Vernetzers oder durch strahlenchemische Methoden (UV-Härtung, Elektronenstrahlhärtung), bevorzugt hauptsächlich zwischen den Endblöcken oder hauptsächlich in den Mittelblöcken erfolgen. Hierzu können die End- oder Mittelblöcke der erfindungsgemäßen Blockcopolymere chemisch modifiziert werden oder vernetzbare/reaktive Gruppen durch Copolymerisation in die entsprechenden Blöcken eingebracht werden, wie bspw. Di- und Triacrylate. Bevorzugt sind Blockcopolymere, die vernetzbare Gruppen in den Endblöcken enthalten. Beispiele hierfür sind Blockcopolymere vom Typ SEEPS und SEBS aus der Septon® V-Serie, die über organische Peroxide oder durch UV-Strahlung oder Elektronenbestrahlung radikalisch vernetzbar sind. Ein weiteres Beispiel sind Triblockcopolymere aus Methylmethacrylat-Butylacrylat-Methylmethacrylat, die in den Polymethylmethacrylat-Endblöcken ein polares Comonomer enthalten (kommerziell erhältlich bspw. als Nanostrength® Functional MAM Blockcopolymere). Diese Comonomereinheiten können dann durch Zugabe von Vernetzungsmitteln wie Anhydriden oder durch thermische kationische Vernetzung verknüpft werden, so dass über die Endblöcke ein dreidimensionales Polymernetzwerk aufgebaut werden kann. In ähnlicher Weise können auch die Mittelblöcke vernetzt werden, z.B. durch Elektronenbestrahlung oder thermisch durch Peroxide.

Weiterhin können auch Mischungen der vorstehend beschriebenen Polymere verwendet werden.

Der erfindungsgemäße Separator kann als ein freitragender Separator mit freitragender poröser Schicht ausgebildet sein. Das E-Modul der freitragenden porösen Schicht ist hierbei bevorzugt größer als 50 N/mm², besonders bevorzugt größer als 100 N/mm² und/oder die Reißdehnung größer als 5%, weiterhin bevorzugt größer als 10% und besonders bevorzugt größer als 20%.

Alternativ kann der erfindungsgemäße Separator auch auf ein Substrat aufgebracht sein, welches bevorzugt ausgewählt ist aus der Gruppe, enthaltend Anoden, Anodenmaterial, Kathoden, Kathodenmaterial, poröse Trägermaterialien, wie mikroporöse Kunststoffseparatoren, Vliese oder Mischungen derselben.

Diese alternativen Ausführungsformen werden im Zusammenhang mit dem erfindungsgemäßen Herstellungsverfahren nachfolgend näher beschrieben.

Die erfindungsgemäßen Separatoren werden bevorzugt nach dem nachstehend beschriebenen Verfahren hergestellt. Die vorliegende Erfindung betrifft daher ferner ein Verfahren zur Herstellung eines Separators für eine elektrochemische Zelle, bevorzugt eines Separators wie vorstehend beschrieben, das die Herstellung einer porösen Schicht, umfassend mindestens ein Blockcopolymer mit drei oder mehr Polymerblöcken und mindestens ein Aluminiumoxid oder
- hydroxid, mit den folgenden Schritten umfasst:
   i. Bereitstellen einer Beschichtungszusammensetzung, umfassend mindestens ein Lösungsmittel, eine Dispersion von Aluminiumoxid- oder
- hydroxidteilchen in diesem Lösungsmittel sowie eine Lösung des Blockcopolymers,
   ii. Aufbringen der Beschichtungszusammensetzung auf ein Substrat, um eine Beschichtung auf diesem Substrat zu erhalten und
   iii Aushärten der Beschichtung durch Verdampfen des Lösungsmittels und optionales Quervernetzen des Polymers.

Als Aluminiumoxid- oder -hydroxidteilchen werden bevorzugt die vorstehend beschriebenen verwendet. Als Blockcopolymer werden bevorzugt die vorstehend beschriebenen Blockcopolymere mit drei oder mehr Blöcken verwendet.

Als Lösungsmittel sind insbesondere solche mit einem Siedepunkt von etwa 60 °C bis etwa 250 °C geeignet, wie Wasser, Alkohole, Ester, Ether, Ketone, Amide und aliphatische und aromatische, ggf. halogenierte Lösungsmittel, insbesondere derartige Kohlenwasserstoffe. Besonders bevorzugt sind Methanol, Ethanol, Isopropanol, n-Propanol, Butanol, Diethylether, Propylenmonomethylether, Aceton, Methylethylketon, Methylisobutylketon, Essigsäureethylester, Essigsäurebutylester, N-Methylpyrrolidon, N-Ethylpyrrolidon, Dimethylacetamid, Toluol, Xylol, Benzol, Hexan, Heptan, Benzine mit definiertem Siedebereich und Mischungen derselben. Benzine mit definiertem Siedebereich sind bspw. sog. Extraktionsbenzin / C7 (Siedebereich 65 - 100 °C), Reinigungsbenzin / C8 (Siedebereich 100 - 140 °C), Testbenzin / C9 (Siedebereich 140 - 185 °C) usw. Um die Löslichkeits- und Verdunstungseigenschaften zu optimieren, sind Lösungsmittelgemische besonders geeignet.

Um eine hohe Porosität und eine gleichmäßige Struktur der Schicht zu erreichen, sollten die Aluminiumoxid/-hydroxid-Pigmente als feine Partikel im Lösungsmittel dispergiert vorliegen und das Bindemittel in diesem Lösungsmittel gelöst sein. Entsprechend der Löslichkeit des ausgewählten Blockcopolymeren und der optimalen Dispergierung der Pigmentteilchen ist es vorteilhaft, durch Verwendung eines dafür geeigneten Lösungsmittels eine Lösung des Blockcopolymeren herzustellen, eine Vordispergierung des Pigments in einem geeigneten Lösungsmittel, das von dem ersten Lösungsmittel verschieden sein kann, vorzunehmen und dann eine Mischung dieser Komponenten vorzunehmen, wobei sich das resultierende Lösungsmittelgemisch aus den Zusammensetzungen der Einzelkomponenten ergibt.

Hierfür wird zunächst eine Pigmentdispersion in Lösungsmittel hergestellt, indem das Pigment mit Dispergiermittel unter Rühren im Lösungsmittel verteilt wird. Hilfreich sind hohe Scherkräfte, um die aneinander haftenden Pigmentpartikel zu vereinzeln. Hierfür eignen sich z.B. Rührwerkskugelmühlen oder Dispergierscheiben. Zu der fein dispergierten Pigmentmischung wird dann eine Lösung des Bindemittels gegeben. Bei der Auswahl der Lösungsmittel ist darauf zu achten, dass keine Unverträglichkeiten auftreten, die zu Ausfällungen führen können. Geeignete Lösungsmittelgemische können vom Fachmann in einfachen Vorversuchen ermittelt werden.

Das Pigment- zu Bindemittel-Gewichtsverhältnis liegt im Bereich von 1,5:1 bis 20:1, bevorzugt im Bereich von 1,75:1 bis 20:1, weiterhin bevorzugt von 2:1 bis 20:1, besonders bevorzugt von 2,25 bis 10:1 und insbesondere von 2,5 bis 8:1, sowohl in der Dispersion als auch in der porösen Schicht. Das Verhältnis kann optimiert werden, um eine möglichst hohe mechanische Festigkeit des Separators zu erreichen bei gleichzeitig hoher Porosität. Der Anteils des Feststoffs kann variiert werden, um die Löslichkeit des Blockcopolymers und/oder die Stabilität der Dispersion zu gewährleisten und/oder die Viskosität der Lösung einzustellen.

Die Teilchengröße der dispergierten Teilchen liegt bevorzugt im Bereich von 50 nm bis 2000 nm, besonders bevorzugt von 100 nm bis 500 nm. Dies kann durch eine geeignete Oberflächenbelegung der Pigmentteilchen mit

Dispergiermittel erzielt werden, so dass eine stabile Dispersion durch Rühren oder Mahlen von Sekundär- oder Primärpartikeln entsteht. Die Messung der Teilchengröße erfolgt mittels Laserbeugung an verdünnten Boehmit-Solen nach der MIE-Methode mit einem Beckmann Coulter LS-Gerät.

Die Beschichtungsdispersion (und somit auch der daraus erhaltene Separator) kann weitere Bestandteile enthalten. Insbesondere kann ein Teil des Blockcopolymers, das als Bindemittel wirkt, ersetzt werden durch Materialien, die "verträglich", d.h. mischbar, sind mit den Endblöcken oder den-Mittelblöcken. Hierzu eignen sich Homopolymere, Copolymere oder Harze, die sich bei der Phasentrennung beim Trocknen der Beschichtung in einer der Phasen anreichern, also entweder in den End- oder den Mittelblöcke. Beispiele für Materialien, die sich in der Phase der Endblöcke anreichern, sind Polystyrol bei einem SEBS-Blockcopolymer oder Polymethylmethylacrylat bei Methylmethacrylat-Butylacrylat-Methylmethacrylat-Blockcopolymeren. Eine Anreicherung in den Mittelblöcken eines SIS-Copolymers kann zum Beispiel mit einem bei Raumtemperatur (23 °C) und Normaldruck (1,01325 bar / 1.013,25 hPa) flüssigen Polyisoprenharz erreicht werden.

Desweiteren können bis zu 5 Gew.-%, bezogen auf die poröse Beschichtung nach Trocknung, d.h. nach Verdampfen des Lösungsmittels, Hilfsstoffe eingesetzt werden, um den Beschichtungsprozess zu optimieren und/oder die Eigenschaften der Beschichtung zu verändern. Beispiele hierfür sind Benetzungshilfsmittel, z.B. fluorierte nicht-ionische Tenside, wie sie z.B. unter dem Handelsnamen Capstone® (DuPont, Wilmington, DE, USA) angeboten werden, Entschäumer, z.B. Silikone, Verdickungsmittel, z.B. Polyurethanverdicker, Polyacrylatverdicker oder Cellulosederivate. Weitere geeignete Hilfsstoffe sind z.B. Antioxidantien oder UV-Stabilisatoren.

Die mit dem Bindemittel versetzte Pigmentdispersion kann mittels bekannter Verfahren als Beschichtung auf ein Trägermaterial aufgetragen werden. Hierfür eignen sich z.B. Walzenauftragungsverfahren mit Rollrakel, Luftbürste oder Tiefdruckwalzen oder enddosierte Verfahren wie z.B. Düsenbeschichtung oder Vorhanggießen. Das Auftragungsgewicht wird hierbei so gewählt, dass die gewünschte Schichtdicke des getrockneten Separators erreicht wird. Hierbei kann die Auftragung auch mehrfach erfolgen. Die bevorzugte Dicke der Schicht ist bereits vorstehend beschrieben worden.

Anschließend wird die flüssige Beschichtung auf dem Trägermaterial getrocknet. Hierfür eignen sich bspw. Heißluftöfen und Trockner mit Heißluftgebläse. Das Lösungsmittel sollte vollständig verdampft werden. Dabei bildet sich die getrocknete poröse Separatorschicht auf dem Träger aus.

Als Trägermaterial sind temporäre und permanente (funktionale) Trägermaterialien geeignet. Als temporäres Trägermaterial für eine freitragende oder vom Träger transferierbare Beschichtung sind alle bahnförmigen Materialien geeignet, von denen der getrocknete Separator wieder abgelöst werden kann. Der Träger kann bspw. aus Folie oder Papier bestehen und eine oder mehrere Beschichtungen aufweisen. Bevorzugt sind insbesondere Beschichtungen, die ein kontrolliertes Anhaften und Ablösen des Separators erlauben, z.B. sog. Release- oder Antiblocking-Agenzien wie z.B. Polyamide, Amidwachse, Montanwachse, Polyolefinwachse, Esterwachse, Calciumstearat, Zinkstearat, Polyvinylester, Polyacrylatcopolymere, Fettsäureester, langkettige Alkylpolymere, Polysaccharide, Polysiloxane und Mischungen derselben. Bevorzugt werden silikonisierte Papiere oder Folien als temporäre Trägermaterialien eingesetzt, deren Oberfläche so eingestellt ist, dass eine Mindesthaftung zum getrockneten Separator gegeben ist, dieser aber mit geringer Kraft von dem Träger abgezogen werden kann. Diese Abzugskraft wird nach FTM 3 (Finat Test Methods) gemessen und liegt bevorzugt bei 0,1 N/50 mm bis 10 N/50 mm Kraft pro Probenbreite. Weiterhin sind mit fluorhaltigen Substanzen beschichtete Oberflächen oder Folien geeignet als temporäre Trägermaterialien sowie Folien aus Fluorpolymeren.

Das Abziehen der getrockneten Beschichtung von dem temporären Träger kann bspw. von Hand geschehen, solange die abzuziehende Fläche nicht groß ist, aber auch maschinell, z.B. auf einem Rollenumwickler. Dabei kann der temporäre Träger zurückgewonnen werden. Er kann dann erneut zur Beschichtung eingesetzt werden, ggf. auch mehrfach. Dies ist besonders aus Kostengründen bevorzugt. Alternativ kann der beschichtete Träger, z.B. nach Beschneiden auf die notwendige Breite, in der Batterieherstellung so eingesetzt werden, dass die Beschichtung erst bei der Batterieherstellung auf eine Elektrode oder zwischen die Elektroden, d.h. Kathode und Anode einer Batterie, übertragen wird. Dabei kann es vorteilhaft sein, dass zunächst die Separatorschicht an der Kathode oder Anode anhaftet, bevor der temporäre Träger abgezogen wird.

Als permanente/funktionale Trägermaterialien kommen insbesondere flächenförmige Komponenten einer Lithium-Ionen-Batterie in Frage. Als Separatorschicht ist die erfindungsgemäße Beschichtung stets zwischen Anode und Kathode anzuordnen. Dabei kann die Beschichtung auf die Kathode bzw. das Kathodenmaterial, die Anode bzw. das Anodenmaterial direkt aufgebracht werden. Nach dem Trocknen dient diese Beschichtung dann als Separatorschicht, die mit oder ohne weitere Separatorschicht in der Batterie verwendet werden kann. Als weitere Separatorschichten können z.B. Kunststoffvliese, z.B. Spinnvliese und Elektrospinnvliese oder herkömmliche poröse Polyolefinseparatoren zusätzlich zu der auf der Elektrode aufgebrachten Separatorbeschichtung eingesetzt werden. Alternativ kann die Beschichtung zunächst auf einen funktionalen Träger aufgebracht werden, der dann mit der Beschichtung als Separator in einer Lithium-Ionen-Batterie verwendet wird. Hierzu kann die Beschichtung einseitig oder beidseitig auf z.B. Kunststoffvliese, z.B. Spinnvliese und Elektrospinnvliese oder herkömmliche poröse Polyolefinseparatoren aufgebracht werden, um dann einen zusammengesetzten Separator zu bilden. Wichtig ist, dass die erfindungsgemäße Beschichtung gleichmäßig aufgebracht wird, da sie als eigenständige Separatorschicht wirkt.

Die Erfindung betrifft daher ferner eine Beschichtungszusammensetzung zur Herstellung eines erfindungsgemäßen Separators, bevorzugt in dem vorstehend beschriebenen erfindungsgemäßen Verfahren, enthaltend eine Lösung von mindestens einem Blockcopolymer mit drei oder mehr Polymerblöcken, bevorzugt einem wie vorstehend bereits detailliert beschriebenen Blockcopolymer und eine Dispersion mindestens eines Aluminiumoxids oder -hydroxids, bevorzugt eines wie vorstehend bereits detailliert beschriebenen Aluminiumoxids oder -hydroxids, in mindestens einem Lösungsmittel, wobei das Gewichtsverhältnis von Aluminiumoxid oder -hydroxid zu Blockcopolymer im Bereich von 1,5:1 bis 20:1 liegt, bevorzugt im Bereich von 1,75:1 bis 20:1, weiterhin bevorzugt von 2:1 bis 20:1, besonders bevorzugt von 2,25:1 bis 20:1 oder 2,25:1 bis 10:1 und insbesondere von 2,5:1 bis 20:1 oder 2,5:1 bis 8:1. Bevorzugte Ausführungsformen dieser Beschichtungszusammensetzung sind bereits vorstehend beschrieben worden.

Werden hier thermoplastische Kunststoffe als funktionales Trägermaterial verwendet, kann dieses Material die Funktion der Batterieabschaltung bei Überhitzung übernehmen (sog. Shut-Down). Insbesondere poröse Polyolefinfolien können dazu genutzt werden, die Leitfähigkeit für Lithiumionen soweit zu reduzieren, dass eine unkontrollierte Entladung zwischen Anode und Kathode, z.B. bei übermäßiger Stromentnahme aus der Batterie, behindert wird. Hierfür ist es erforderlich, dass die Leitfähigkeit des Elektrolyten in der Separatorschicht mindestens um den Faktor 100 reduziert wird. Die Gurley-Porosität nimmt dabei stark ab, so dass die Luftdurchlässigkeit, gemessen nach Gurley auf mindestens 10.000 s pro 100 ml ansteigt. Dieser Shut-Down-Effekt kann über den Schmelzpunkt und das Schmelzverhalten der verwendeten Polymere gesteuert werden. Bei Polyethylen sind z.B. Shut-Down-Temperaturen von 80 °C bis 130 °C möglich, bei Polypropylen von 120 °C bis 150 °C. Durch geeignete Auswahl der Polymeren und Copolymeren bzw. durch Mischung derselben kann dieser Bereich variiert werden.

Die erfindungsgemäßen Separatoren weisen eine hohe mechanische Festigkeit auf. Die mechanische Festigkeit der porösen Schicht gewährleistet, dass diese weder während der Herstellung der Batterie noch in der Anwendung der Batterie reißt. Die Reißdehnung beträgt bevorzugt mindestens 5%, weiterhin bevorzugt mindestens 10% und besonders bevorzugt mindestens 20%. Das E-Modul der erfindungsgemäßen Beschichtungen beträgt im freitragenden Zustand bevorzugt mindestens 50 N/mm², bevorzugt mehr als 100 N/mm².

Obwohl die als Bindemittel verwendeten Blockcopolymere weitgehend hydrophob sind, findet eine Benetzung der Separatoren mit Flüssigkeiten wie bspw. Wasser, weiteren geeigneten Lösungsmitteln oder Elektrolyt, bspw. einer 1:1 Mischung aus Ethylencarbonat und Dimethylcarbonat mit 1 mol/l Lithiumhexafluorophosphat spontan statt, d.h. beim Aufbringen eines entsprechenden Tropfens auf die poröse Schicht wird diese sofort benetzt, und es ist eine Spreizung des Tropfens zu beobachten. Sofern die Schicht freitragend ist, schlägt das Lösungsmittel unmittelbar auf die Rückseite der Schicht durch, wobei die Flüssigkeit die poröse Struktur vollständig durchdringt.

Während herkömmliche Separatoren auf Polyolefin-Basis innerhalb einer Stunde bei 90 °C um mehrere Prozent schrumpfen, je nach Herstellungsverfahren in Längs- und/oder Querrichtung, bezogen auf den Bahnlauf im Herstellungsverfahren, zeigen die erfindungsgemäßen Separatoren eine deutlich geringere Schrumpfung in Längs- wie in Querrichtung, bevorzugt von weniger als 0,5%. Sofern die poröse Schicht auf ein funktionales Trägermaterial aufgebracht ist, wie ein Vlies oder einen Polyolefinseparator, weist auch der erhaltene mehrlagige Separator eine geringere Schrumpfung auf als das Trägermaterial allein. Die Schrumpfung kann weiterhin durch die Einwirkung von Lösungsmitteln und die Trocknung der Schicht, insbesondere unter Bedingungen mit geringer Bahnspannung, variiert werden. Ein erfindungsgemäßer mehrlagiger Separator, umfassend die poröse Beschichtung und ein (ebenfalls poröses) Polyolefinträgermaterial, weist unter den oben angegebenen Bedingungen bevorzugt eine Schrumpfung von weniger als 3%, insbesondere weniger als 1% in Längs- und Querrichtung auf.

Ferner ist die poröse Schicht stabil in typischen Elektrolyten für Lithium-Ionen-Batterien, insbesondere gegen organische Carbonat-Lösungsmittel, wie bspw. Dimethylcarbonat, Ethylmethylcarbonat, Vinylcarbonat, Diethylcarbonat etc., sowie die verwendeten Lithiumsalze, wie bspw. Lithiumhexafluorophosphat. Insbesondere ist bei Kontakt mit dem Elektrolyten keine Verformung, Auflösung oder Verfärbung der porösen Schicht zu beobachten.

Da die poröse Schicht temperaturstabil ist, können die erfindungsgemäßen Separatoren kurzzeitig auf Temperaturen im Bereich von 100 °C bis 200 °C, bevorzugt von 120 °C bis 150 °C erhitzt werden, um adsorbiertes Wasser zu entfernen, bspw. mittels Heißluft oder Mikrowellenheizung, optional auch unter vermindertem Druck bzw. im Vakuum. So kann sowohl das im Herstellungs-verfahren verwendete Lösungsmittel entfernt werden, als auch die durch den Separator in eine Batterie eingetragene Wassermenge minimiert werden, die zur Zersetzung des Elektrolyten, der Anode und/oder der Kathode führen kann. Das Erhitzen kann bspw. kurz vor dem Zusammenfügen der Batteriekomponenten erfolgen.

Aufgrund der hohen Porosität und der durchgängigen Porenstruktur weisen die Separatoren einen niedrigen Widerstand gegenüber Lithiumonen auf, was als Kennzahl durch eine niedrige McMullin-Zahl von unter 12 ausgedrückt wird. Diese Zahl wird errechnet aus dem Verhältnis der spezifischen Leitfähigkeiten von Elektrolyt und von mit Elektrolyt gefülltem Separator (S. S. Zhang Journal of Power Sources 2007, 164, 351-364). Eine Zahl kleiner als 12 wird angestrebt, um in Lithium-Ionen-Zellen den Transport von Lithiumonen durch den Separator zu gewährleisten.

Der erfindungsgemäße Separator eignet sich daher auch insbesondere zur Verwendung in einer Lithium-Ionen-Batterie. Die vorliegende Erfindung betrifft daher ferner eine Lithium-Ionen-Batterie, umfassend mindestens eine Anode, mindestens eine Kathode und mindestens einen erfindungsgemäßen Separator, sowie vorteilhafterweise mindestens einen Elektrolyten.

Lithium-Ionen-Batterien umfassen im Sinne der vorliegenden Erfindung alle elektrochemischen Zellen, in denen Lithium reversibel zwischen Anodenmaterial und Kathodenmaterial transportiert werden kann, insbesondere wiederaufladbare Batterien. Diese Zellen sind besonders geeignet für wiederaufladbare Batterien. Sie können als Kathodenmaterial z.B. LiCoO₂, LiFePO₄ oder LiNi_{0,33}Co_{0,33}Mn_{0,33}O₂ (NMC) und als Anodenmaterial z.B. metallisches Lithium oder Lithium/Graphit-Einlagerungsverbindungen enthalten, die in der Regel auf einen metallischen Stromableiter, z.B. eine Kupferfolie oder Aluminiumfolie, aufgebracht sind. Zur Trennung von Kathode und Anode ist dann mindestens ein erfindungsgemäßer Separator zwischen Kathode und Anode vollflächig eingebracht, um den direkten Kontakt zwischen den Elektroden zu verhindern. Um den Transport der Lithiumionen in der Batterie zu gewährleisten, werden die Hohlräume (Poren) der Anode, Kathode und der Separatorschicht(en) mit einem Elektrolyten gefüllt und somit elektrochemisch verbunden. Diese Elektrolyten enthalten in der Regel organische Lösungsmittel, in denen Lithiumsalze gelöst sind.

Die im Zusammenhang mit der Erfindung angegebenen Eigenschaften werden nach den folgenden Methoden bestimmt:
Benetzung: Die Benetzung wird nach dem Verfahren bestimmt, welches im NASA Report NASA/TM-201 0-216099 "Battery Separator Characterization and
Evaluation Procedures for NASA's Advanced Lithium-Ion Batteries"; May 2010 beschrieben ist. Beobachtet wird die Benetzung und Penetration eines auf die Separatoroberfläche aufgebrachten Tropfens der Elektrolyt-Flüssigkeit. Optimal ist eine spontane Benetzung.

Mechanische Festigkeit: Gemessen werden Reißfestigkeit (Bruchlast), Reißdehnung und E-Modul nach ASTM 882-02 (ASTM D-638), wie auch in S. S. Zhang Journal of Power Sources 2007, 164, 351-364 beschrieben.

Luftdurchlässigkeit nach Gurley: Die Luftdurchlässigkeit des Separators wird nach Gurley entsprechend ASTM D726 bestimmt, wie in S. S. Zhang Journal of Power Sources 2007, 164, 351-364 beschrieben. Der Gurley-Wert, angegeben in Sekunden pro 100 ml Luftvolumen, ist ein Maß für Tortuosität und Durchmesser der Poren.

Porosität: Die Porosität (Hohlraumvolumen) und die Porengrößenverteilung wird nach DIN 66133 mittels Quecksilber-Porosimetrie bestimmt.

Thermische Schrumpfung: Das Schrumpfen unter Temperaturbelastung wird durch Längenmessung vor und nach Lagerung im Vakuumtrockenschrank für 60 min bei 90 °C und für 5 min bei 150 °C bestimmt, wie in S. S. Zhang Journal of Power Sources 2007, 164, 351-364 beschrieben, wobei in Beschichtungsrichtung und quer zur Beschichtungsrichtung gemessen wird.

Elektrochemischer Test:
Eine elektrochemische Zelle mit einer Fläche von etwa 2 cm² wird aus einer Kathode, bestehend aus Aluminiumfolie, einseitig beschichtet mit aktivem Kathodenmaterial aus NCM (LiNi_{0,33}Co_{0,33}Mn_{0,33} O₂), Bindemittel PVDF (Polyvinylidenfluorid)-Copolymer und geringen Anteilen leitfähigem Russ, einer Anode, bestehend aus Lithium-Metallfolie und dem zu testenden Separator aufgebaut. Der Separator wird bei 120 °C über 24 Stunden im Vakuum getrocknet und beim Aufbau der Zelle bei einer Luftfeuchtigkeit von 50 ppm zwischen aktivem Kathodenmaterial und Lithiumfolie angeordnet, so dass der Separator die Kathode und Anode überragt. Nach Zugabe von einer ausreichenden Menge an Elektrolyt (1 M LiPF₆ in 1:1 Ethylencarbonat/ Diethylcarbonat) an die Seite dieser Anordnung wird dieser für mindestens eine Stunde einwirken gelassen, um die Kathode, den Separator und die Anode vollständig zu benetzen und die Poren zu füllen. Ggf. wird überschüssige Flüssigkeit entfernt. Diese Anordnung wird mit äußeren Ableitungen versehen, die elektrisch mit einem Stromzyklisierungsgerät der Fa. Maccor (Tulsa, OK, USA) verbunden sind. Die Ausgangsladekapazität dieser Zelle liegt bei ca. 250 mAh/g. Mit einem Lade- und Entladestrom von 0,2 C wird die elektrochemische Zelle bei Raumtemperatur zunächst dreimal zyklisiert,
um die Batterie zu formieren. Um die Eignung des eingesetzten Separators zu beurteilen, wird die Restladekapazität in % dann nach 50 Zyklen bei 0,2 C bestimmt. Dieser Wert ist ein Maß für die Stabilität der elektrochemischen Zelle.
Herkömmliche poröse Polyolefinseparatoren erreichen in diesem Test mindestens 80 % Restladekapazität.

### Beispiele

### Beispiel 1

2,5 g Dodecylbenzolsulfonsäure werden in 70 ml Toluol gelöst. In diese Lösung werden 31,5 g Boehmit-Pigment mit einer Kristallitgröße von ca. 40 nm, einer BET Oberfläche von 100 m²/g und einem Al₂O₃-Gehalt von ca. 80 % zwei Stunden lang eingerührt. Anschließend wird die Flüssigkeit mittels einer Perlmühle dispergiert, so dass eine kolloidale Dispersion mit einer mittleren Teilchengröße in der Dispersion von ca. 350 nm, bestimmt mittels Laserbeugung, entsteht.

Eine Binderlösung, enthaltend Kraton G 1651 EU, ein lineares SEBS-Triblockcopolymer (Styrol-Ethylen/Butylen-Styrol) mit einem Anteil von Styrol-Endblöcken von ca. 31,5 % (Hersteller KRATON, Molekulargewicht ca. 240.000, Schmelzindex < 1 g/10 min bei 230°C/5 kg), wird durch Erhitzen des Polymers unter Rückfluss in Toluol in einer Konzentration von 10 Gew.-% hergestellt.

53,7 g der Pigmentdispersion werden vorgelegt und anschließend werden 26,3 g der Binderlösung unter Rühren hinzugefügt, so dass eine Streichmasse mit einem Feststoffgehalt von ca. 25,2% bei einem Pigment-Binder-Verhältnis von 6,7 :1 (entsprechend einem Pigmentanteil von 87%) entsteht.

Die Streichmasse wird mit Hilfe eines Laborstreichtisches (Erichsen Coatmaster, Erichsen GmbH & Co. KG, Hermer, Deutschland) so auf einen temporären Träger Sappi Ultracast Adva Patina-Papier (Sappi Fine Paper Europe S.A., Brüssel, Belgien) appliziert, dass nach dem Abtrocknen des Lösungsmittels eine Beschichtung mit einer Dicke von ca. 20 µm entsteht.

Diese Beschichtung lässt sich leicht von Hand von dem Trägerpapier abziehen. Die Abzugskraft nach FTM3 beträgt 1,4 N/50 mm. Der dann freitragende Separator wird physikalisch und elektrochemisch charakterisiert.

Der 20 µm dicke Separator weist ein E-Modul von 140 N/mm² in Längsrichtung (Beschichtungsrichtung) und 145 N/mm² in Querrichtung auf, eine Reißdehnung von 27 % (längs) und 21 % (quer) und eine Bruchlast von 2,4 N/mm² (längs) und 2,6 N/mm² (quer).

Ein Tropfen eines Elektrolyten (1 M LiPF₆ in 1:1 Ethylencarbonat/ Diethylcarbonat), aufgebracht auf eine der Seiten des porösen Separators, benetzt diesen spontan. Die Luftdurchlässigkeit nach Gurley liegt bei 800 s/100ml. Die mittlere Porengröße beträgt 80 nm, und die Gesamtporosität liegt bei 48%, gemessen mittels Quecksilberporosimetrie entsprechend DIN 66133.

Eine Schrumpfung bei 90 °C über 60 min konnte nicht beobachtet werden. Innerhalb der Messgenauigkeit liegt die Schrumpfung somit unter 0,1%. Auch bei 5 Minuten bei 150 °C ist keine sichtbare Veränderung des Separators zu beobachten.

In einer NMC/Separator/Li-Zelle mit dem porösen Separator wurde in dem oben beschriebenen Batterietest nach 50 Zyklen eine Abnahme der Ladekapazität um lediglich 3 % auf 97% der ursprünglichen Kapazität beobachtet.

### Beispiel 2

150 g Boehmit-Pigment gemäß Beispiel 1 wird 4 Stunden bei 150 °C getrocknet. Das so vorgetrocknete Pigment wird in 750 ml wasserfreiem p-Xylol unter Verwendung eines Ultraschallhomogenisators aufgeschlämmt bzw. vordispergiert. Diese Mischung wird zum Rückfluss erhitzt, und es werden 110 g Phenylmethyldimethoxysilan hinzugetropft. Der Ansatz wird anschließend 10 Stunden zum Rückfluss erhitzt. Anschließend werden 60 ml Ethanol hinzugefügt und die Reaktionslösung wird am Rotationsverdampfer stark eingeengt. Nach zweimaliger Zugabe von Toluol und abermaligem Abdestillieren am Rotationsverdampfer wird das Material auf einer Perlmühle dispergiert, so dass eine kolloidale Dispersion mit einer mittleren Teilchengröße in der Dispersion von ca. 350 nm (Laserbeugung) entsteht.

Diese Pigmentdispersion wird anschließend unter Rühren mit der Binderlösung aus Beispiel 1 versetzt, so dass eine Streichmasse mit einem Feststoffgehalt von ca. 13% bei einem Pigment- Binder - Verhältnis von 3,57 : 1 (78 % Pigmentanteil) entsteht.

Die Streichmasse wird mit Hilfe eines Laborstreichtisches (Erichsen Coatmaster) so auf einen temporären Träger wie in Beispiel 1 appliziert, dass nach dem Abtrocknen des Lösemittels eine Beschichtung mit einer Dicke von ca. 18 µm entsteht.

Diese Beschichtung lässt sich leicht von Hand von dem Trägerpapier abziehen. Die Abzugskraft nach FTM3 beträgt 2,0 N/50 mm. Der dann freitragende Separator wird physikalisch und elektrochemisch charakterisiert.

Der 20 µm dicke Separator weist einen E-Modul von 210 N/mm² in Längsrichtung (Beschichtungsrichtung) und 195 N/mm² in Querrichtung auf, eine Reißdehnung von 20 % (längs) und 18 % (quer) und eine Bruchlast von 3,5 N/mm² (längs) und 3,6 N/mm² (quer).

Ein Tropfen eines Elektrolyten (1 M LiPF₆ in 1:1 Ethylencarbonat/ Diethylcarbonat), aufgebracht auf eine der Seiten des porösen Separators, benetzt spontan. Die Luftdurchlässigkeit nach Gurley liegt bei 1200 s/100 ml. Die mittlere Porengröße beträgt 75 nm und die Gesamtporosität liegt bei 43 %.

Eine Schrumpfung bei 90 °C über 60 min konnte nicht beobachtet werden. Innerhalb der Messgenauigkeit liegt die Schrumpfung somit unter 0,1 %. Auch bei 5 Minuten bei 150 °C ist keine sichtbare Veränderung des Separators zu beobachten.

In einer NMC/Separator/Li-Zelle mit dem porösen Separator wurde in dem oben beschriebenen Batterietest nach 50 Zyklen eine Abnahme der Ladekapazität um lediglich 6 % auf 94 % der ursprünglichen Kapazität beobachtet.

## Patentansprüche

1. Separator für eine elektrochemische Zelle, vorzugsweise eine Lithium-Ionen-Batterie, umfassend eine poröse Schicht, welche mindestens ein Blockcopolymer mit drei oder mehr Polymerblöcken und mindestens ein Aluminiumoxid oder -hydroxid umfasst, wobei das Gewichtsverhältnis von Aluminiumoxid oder -hydroxid zu Blockcopolymer im Bereich von 1,5:1 bis 20:1 liegt, wobei das Blockcopolymer ein thermoplastisches Elastomer darstellt und die endständigen Polymerblöcke gleich oder verschieden sein können und die Monomere der endständigen und mittelständigen Blöcke bevorzugt ausgewählt sind aus der Gruppe, enthaltend Methyl(meth)acrylate, Ethyl(meth)acrylate, n-Propyl(meth)acrylate, n-Butyl(meth)acrylate, tert.-Butyl(meth)acrylate, n-Hexyl(meth)acrylate, 2-Phenoxyethyl(meth)acrylate, Decyl(meth)acrylat, 2-Ethylhexyl(meth)acrylate, Hexyl(meth)acrylate, Hexadecyl(meth)acrylate, Isobutyl(meth)acrylate, Isopropyl(meth)acrylate, Octadecyl(meth)acrylate; Propyl(meth)acrylate, Tetradecyl(meth)acrylate, Vinylbenzoate, Hydroxyethyl(meth)acrylate, Acrylsäure, Methacrylsäure, Crotonsäure, Isocrotonsäure, Maleinsäure, Maleinsäureanhydrid, Styrol, Methylstyrol, Butylstyrol, Propylstyrol, 4-tert.-Butoxystyrol, 4-tert.-Butylstyrol, 2,5-Dimethylstyrol, 2-Methoxystyrol, Ethylen, Propylen, Butylen, Isopren, Butadien, 1-Hexen, Ethylenoxid und Propylenoxid.

2. Separator gemäß Anspruch 1, wobei die Dicke der porösen Schicht 1 bis 100 µm, bevorzugt 3 bis 50 µm beträgt.

3. Separator gemäß einem der vorhergehenden Ansprüche, wobei die Porosität der Schicht 30% bis 70%, bevorzugt 40% bis 60% und/oder der Porendurchmesser 10 nm bis 300 nm, bevorzugt 50 bis 200 nm, jeweils gemessen mittels Quecksilberporosimetrie nach DIN 66133, beträgt.

4. Separator gemäß einem der vorhergehenden Ansprüche, wobei das Aluminiumoxid oder -hydroxid ein Oxid oder Hydroxid der allgemeinen Formel Al₂O₃* x H₂O mit x von 0 bis 1,5 darstellt, bevorzugt ausgewählt aus der Gruppe, enthaltend alpha-Aluminiumoxid, gamma-Aluminiumhydroxid (Tonerde), Böhmite, Pseudoböhmite, Diaspor und amorphes Aluminiumoxid oder -hydroxid oder Mischungen derselben.

5. Separator gemäß einem der vorhergehenden Ansprüche, wobei die Oberfläche des Aluminiumoxids oder -hydroxids modifiziert ist, um die Dispergierbarkeit von Aluminiumoxid- oder -hydroxidpartikeln in Lösungsmitteln zu erhöhen, bevorzugt durch Behandlung mit mindestens einer Substanz, ausgewählt aus der Gruppe, enthaltend carbonsäure- und/oder sulfonsäurehaltige organische Verbindungen, anorganische Säuren, Silane oder Mischungen derselben, weiterhin bevorzugt ausgewählt aus der Gruppe, enthaltend verzweigte und unverzweigte Alkylarylsulfonsäuren, verzweigte und unverzweigte, lineare und zyklische Alkylsulfonsäuren, verzweigte und unverzweigte, lineare und zyklische, aliphatische und aromatische Mono-, Di- und Polycarbonsäuren, fluorhaltige Säuren, Amidosulfonsäuren, Bis(oxalato)borsäure, Flusssäure, Salzsäure, Salpetersäure, Phosphorsäure, Schwefelsäure, HBF₄, HPF₆, HClO₄ und Silane der Struktur SiR¹R²R³R⁴, worin R¹ Alkoxy darstellt, R² und R³ gleich oder verschieden sein können und Alkyl, Aryl oder Alkoxy darstellen und R⁴ Alkyl oder Aryl darstellt, oder Mischungen derselben.

6. Separator gemäß einem der vorhergehenden Ansprüche, wobei die endständigen Polymerblöcke eine höhere Glasübergangstemperatur (Tg_{E}) aufweisen als der oder die mittleren Polymerblöcke (Tg_{M}) und Tg_{E} bevorzugt mehr als 70 °C beträgt und Tg_{M} bevorzugt weniger als 70 °C, weiterhin bevorzugt weniger als 20 °C und besonders bevorzugt weniger als 0 °C beträgt.

7. Separator gemäß einem der vorhergehenden Ansprüche, wobei das Blockcopolymer einen Schmelzflussindex nach ISO 1133 von weniger als 3 g/10 min bei 230 °C (5 kg), bevorzugt weniger als 1 g/ 10 min aufweist.

8. Separator gemäß einem der vorhergehenden Ansprüche, wobei das Blockcopolymer weiterhin bevorzugt ausgewählt ist aus der Gruppe, bestehend aus Styrol-Isopren-Styrol-Triblockcopolymer (SIS), Styrol-Buten-Styrol-Triblockcopolymer (SBS), Styrol-Ethylen/Buten-Styrol-Triblockcopolymer (SEBS), Styrol-Ethylen/Propen-Styrol-Triblockcopolymer (SEPS), Styrol-Ethylen-Ethylen/Propen-Styrol-Blockcopolymer (SEEPS), tert.-Butylstyrol-Ethylen/Propylen-sulfoniertes Styrol-Ethylen/Propylen-tert.-Butylstyrol-Blockcopolymer, Methylmethacrylat-Butylacrylat-Methylmethacrylat-Triblockcopolymer, Methylmethacrylat-Butadien-Styrol-Triblockcopolymer, Acrylsäure-Ethylen-Acrylsäure-Triblockcopolymer, Methylmethacrylat-Ethylenoxid-Methylmethacrylat-Triblockcopolymer oder Mischungen derselben, welche optional quervernetzt sein können.

9. Separator gemäß einem der vorhergehenden Ansprüche, wobei der Separator ein freitragender Separator mit freitragender poröser Schicht ist und das E-Modul der freitragenden porösen Schicht bevorzugt größer als 50 N/mm² ist und/oder die Reißdehnung größer als 5% ist.

10. Separator gemäß einem der Ansprüche 1 bis 8, wobei der Separator auf ein Substrat aufgebracht ist, welches bevorzugt ausgewählt ist aus der Gruppe, enthaltend Anoden, Anodenmaterial, Kathoden, Kathodenmaterial, poröse Trägermaterialien wie mikroporöse Kunststoffseparatoren, Vliese oder Mischungen derselben.

11. Lithium-Ionen-Batterie, umfassend mindestens eine Anode, mindestens eine Kathode und mindestens einen Separator gemäß einem der vorhergehenden Ansprüche.

12. Verfahren zur Herstellung eines Separators für eine elektrochemische Zelle, gemäß einem der Ansprüche 1 bis 10, umfassend die Herstellung einer gemäß Schicht, der Ansprüche 1 bis 10, umfassend die Herstellung einer porösen Schicht, umfassend mindestens ein Blockcopolymer mit drei oder mehr Polymerblöcken, das ein thermoplastisches Elastomer darstellt und mindestens ein Aluminiumoxid oder -hydroxid, umfassend die folgenden Schritte:
i. Bereitstellen einer Beschichtungszusammensetzung, umfassend mindestens ein Lösungsmittel, eine Dispersion von Aluminiumoxid- oder -hydroxidteilchen in diesem Lösungsmittel sowie eine Lösung des Blockcopolymers,
ii. Aufbringen der Beschichtungszusammensetzung auf ein Substrat, um eine Beschichtung auf diesem Substrat zu erhalten und
iii. Aushärten der Beschichtung durch Verdampfen des Lösungsmittels und optionales Quervernetzen des Polymers.

13. Verfahren gemäß Anspruch 12, wobei das Lösungsmittel einen Siedepunkt von etwa 60 °C bis etwa 250 °C aufweist, bevorzugt ausgewählt aus der Gruppe, enthaltend Wasser, Alkohole, Ester, Ether, Ketone, Amide und aliphatische und aromatische Lösungsmittel, besonders bevorzugt ausgewählt aus der Gruppe, enthaltend Methanol, Ethanol, Isopropanol, n-Propanol, Butanol, Diethylether, Propylenmonomethylether, Aceton, Methylethylketon, Methylisobutylketon, Essigsäureethylester, Essigsäurebutylester, N-Methylpyrrolidon, N-Ethylpyrrolidon, Dimethylacetamid, Toluol, Xylol, Benzol, Hexan, Heptan, Benzine mit definiertem Siedebereich und Mischungen derselben.

14. Verfahren gemäß Anspruch 12 oder 13, wobei die zur Herstellung der Suspension verwendeten Aluminiumoxid- oder -hydroxidpartikel eine mittlere Teilchengröße im Bereich von 50 nm bis 2000 nm aufweisen.

## Claims

1. Separator for an electrochemical cell, preferably a lithium-ion battery, comprising a porous layer that comprises at least one block copolymer with three or more polymer blocks and at least one aluminium oxide or hydroxide, wherein the weight ratio of aluminium oxide or hydroxide to block copolymer lies within a range of 1.5:1 to 20:1, wherein the block copolymer represents a thermoplastic elastomer and the terminal polymer blocks can be identical or different, and the monomers of the terminal and middle blocks are preferably selected from the group including methyl(meth)acrylate, ethyl(meth)acrylate, n-propyl(meth)acrylate, n-butyl(meth)acrylate, tert.- butyl(meth)acrylate, n-hexyl(meth)acrylate, 2-phenoxyethyl(meth)acrylate, decyl(meth)acrylate, 2-ethylhexyl(meth)acrylate, hexyl(meth)acrylate, hexadecyl(meth)acrylate, isobutyl(meth)acrylate, isopropyl(meth)acrylate, octadecyl(meth)acrylate; propyl(meth)acrylate, tetradecyl(meth)acrylate, vinyl benzoate, hydroxyethyl(meth)acrylate, acrylic acid, methacrylic acid, crotonic acid, isocrotonic acid, maleic acid, maleic acid anhydride, styrol, methyl styrol, butyl styrol, propyl styrol, 4-tert.-butoxy styrol, 4-tert.-butyl styrol, 2,5- dimethyl styrol, 2-methoxy styrol, ethylene, propylene, butylene, isoprene, butadiene, 1-hexene, ethylene oxide and propylene oxide.

2. Separator according to claim 1, wherein the thickness of the porous layer is 1 to 100 µm, preferably 3 to 50 µm.

3. Separator according to one of the preceding claims, wherein the porosity of the layer is 30% to 70%, preferably 40% to 60% and/or the pore diameter 10 nm to 300 nm, preferably 50 to 200 nm, each measured by means of mercury porosimetry according to DIN 66133.

4. Separator according to one of the preceding claims, wherein the aluminium oxide or hydroxide represents an oxide or hydroxide with the general formula Al₂O₃* x H₂O with x of 0 to 1.5, preferably selected from the group including alpha-aluminium oxide, gamma- aluminium hydroxide (alumina), Böhmite, pseudo-Böhmite, diaspore and amorphous aluminium oxide or hydroxide or mixtures thereof.

5. Separator according to one of the preceding claims, wherein the surface of the aluminium oxide or hydroxide is modified for increasing the dispersibility of aluminium oxide or hydroxide particles in solvents, preferably through treatment with at least one substance selected from the group including carboxylic acid and/or sulphonic acid containing organic compounds, anorganic acids, silanes or mixtures thereof, more preferably selected from the group including branched and unbranched alkyl aryl sulphonic acids, branched and unbranched, linear and cyclic alkylsulphonic acids, branched and unbranched, linear and cyclic, aliphatic and aromatic mono-, di- and polycarboxylic acids, fluorine containing acids, amidosulphonic acids, bis(oxalato)boracic acid, fluoric acid, hydrochloric acid, nitric acid, phosphoric acid, sulphuric acid, HBF₄, HPF₆, HClO₄ und silanes with the structure SiR¹R²R³R⁴, wherein R¹ represents alkoxy, R² and R³ can be identical or different and represent alkyl, aryl or alkoxy, and R⁴ represents alkyl or aryl or mixtures thereof.

6. Separator according to one of the preceding claims, wherein the terminal polymer blocks have a higher glass transition temperature (Tg_{E}) than the middle polymer block(s) (Tg_{M}) and Tg_{E} is preferably more than 70 °C and Tg_{M} preferably less than 70 °C, more preferably less than 20 °C and particularly preferably less than 0 °C.

7. Separator according to one of the preceding claims, wherein the block copolymer has a melt flow index according to ISO 1133 of less than 3 g/10 min at 230 °C (5 kg), preferably less than 1 g/10 min.

8. Separator according to one of the preceding claims,
wherein the
block copolymer is more preferably selected from the group consisting of styrol isoprene styrol triblock copolymer (SIS), styrol butene styrol triblock copolymer (SBS), styrol ethylene/butene styrol triblock copolymer (SEBS), styrol ethylene/propene styrol triblock copolymer (SEPS), styrol ethylene ethylene/propene styrol block copolymer (SEEPS), tert.-butyl styrol ethylene/propylene sulphonated styrol ethylene/propylene tert.-butyl styrol block copolymer, methylmethacrylate butylacrylate methylmethacrylate triblock copolymer, methylmethacrylate butadiene styrol triblock copolymer, acrylic acid ethylene acrylic acid triblock copolymer, methylmethacrylate ethylene oxide methylmethacrylate triblock copolymer or mixtures thereof, which can optionally be cross-linked.

9. Separator according to one of the preceding claims, wherein the separator is an unsupported separator with an unsupported porous layer and the e-module of the unsupported porous layer is preferably greater than 50 N/mm² and/or the elongation at break is greater than 5%.

10. Separator according to one of the claims 1 to 8, wherein the separator is applied onto a substrate that is preferably selected from the group including anodes, anode material, cathodes, cathode material, porous substrates such as microporous plastic separators, fleeces or mixtures thereof.

11. Lithium-ion battery, comprising at least one anode, at least one cathode and at least one separator according to one of the preceding claims.

12. Method for producing a separator for an electrochemical cell according to one of the claims 1 to 10,
comprising the production of a porous layer, comprising at least one block copolymer with three or more polymer blocks that represents a thermoplastic elastomer, and at least one aluminium oxide or hydroxide, comprising the following steps:
i. provision of a coating composition comprising at least one solvent, a dispersion of aluminium oxide or hydroxide particles in this solvent and a solution of the block copolymer,
ii. application of the coating composition onto a substrate to obtain a coating on this substrate, and
iii. curing of the coating through evaporating the solvent and optionally cross-linking of the polymer.

13. Method according to claim 12, wherein the solvent has a boiling point of approximately 60 °C to approximately 250 °C, preferably selected from the group including water, alcohols, ester, ether, ketones, amides and aliphatic and aromatic solvents, more preferably selected from the group including methanol, ethanol, isopropanol, n-propanol, butanol, diethylether, propylene monomethylether, acetone, methyl ethyl ketone, methyl isobutyl ketone, acetic acid ethylester, acetic acid butylester, N-methyl pyrrolidone, N-ethyl pyrrolidone, dimethyl acetamide, toluol, xylol, benzol, hexane, heptane, benzines with a defined boiling range and mixtures thereof.

14. Method according to claim 12 or 13, wherein the aluminium oxide or hydroxide particles used for producing the suspension have a median particle size within a range of 50 nm to 2000 nm.

## Revendications

1. Séparateur destiné à une cellule électrochimique, de préférence une batterie au lithium-ion, comprenant une couche poreuse qui comporte au moins un copolymère à blocs avec trois ou plus de trois blocs polymères et au moins un oxyde ou hydroxyde d'aluminium, le rapport de poids de l'oxyde ou de l'hydroxyde d'aluminium au copolymère à blocs se situant dans la plage allant de 1,5:1 à 20:1, le copolymère à blocs représentant un élastomère thermoplastique, et les blocs polymères terminaux pouvant être identiques ou différents, et les monomères des blocs terminaux et de milieu de chaîne étant de préférence choisis dans le groupe comprenant des méthacrylates de méthyle, méthacrylates d'éthyle, méthacrylates de n-propyle, méthacrylates de n-butyle, méthacrylates de tert-butyle, méthacrylates de n-héxyle, méthacrylates de 2-phénoxyéthyle, méthacrylates de décyle, méthacrylates de 2-éthylhexyle, méthacrylates d'hexyle, méthacrylates d'hexadécyle, méthacrylates d'isobutyle, méthacrylates d'isopropyle, méthacrylates d'octadécyle, méthacrylates de propyle, méthacrylates de tétradécyle, benzoates de vinyle, méthacrylates d'hydroxyéthyle, acide acrylique, acide méthacrylique, acide crotonique, acide isocrotonique, acide maléique, anhydride maléique, styrène, méthylstyrène, butylstyrène, propylstyrène, 4-tert-butoxystyrène, 4-tert-butylstyrène, 2,5-diméthylstyrène, 2-méthoxystyrène, éthylène, propylène, butylène, isoprène, butadiène, 1-hexène, oxyde d'éthylène et oxyde de propylène.

2. Séparateur selon la revendication 1, l'épaisseur de la couche 1 poreuse allant jusqu'à 100 µm, et étant de préférence de 3 à 50 µm.

3. Séparateur selon l'une des revendications précédentes, la porosité de la couche étant de 30 % à 70 %, de préférence de 40 % à 60 % et/ou le diamètre de pore étant de 10 nm à 300 nm, de préférence de 50 à 200 nm, mesuré respectivement par porosimétrie au mercure selon DIN 66133.

4. Séparateur selon l'une des revendications précédentes, l'oxyde ou l'hydroxyde d'aluminium représentant un oxyde ou un hydroxyde de formule générale Al₂O₃ * x H₂O, avec x de 0 à 1,5, choisi de préférence dans le groupe comprenant l'alumine alpha, l'alumine gamma (alumine), la boehmite, la pseudo-boehmite, le diaspore et de l'oxyde ou de l'hydroxyde d'aluminium amorphe ou des mélanges de ceux-ci.

5. Séparateur selon l'une des revendications précédentes, la surface de l'oxyde ou de l'hydroxyde d'aluminium étant modifiée pour augmenter l'aptitude à la dispersion de particules d'oxyde ou d'hydroxyde d'aluminium dans des solvants, de préférence par traitement avec au moins une substance choisie dans le groupe comprenant des composés organiques, contenant de l'acide carboxylique et/ou de l'acide sulfonique, des acides inorganiques, des silanes ou des mélanges de ceux-ci, et choisie par ailleurs de préférence dans le groupe comprenant des acides sulfoniques alkylarylés ramifiés et non ramifiés, des acides sulfoniques alkylés linéaires et cycliques, ramifiés et non ramifiés, des acides monocarboxyliques, dicarboxyliques et polycarboxyliques aliphatiques et aromatiques, linéaires et cycliques, ramifiés et non ramifiés, des acides contenant du fluor, des acides amino-sulfoniques, l'acide borique bis(oxalate), l'acide fluorhydrique, l'acide chlorhydrique, l'acide nitrique, l'acide phosphorique, l'acide sulfurique, HBF₄, HPF₆, HclO₄ et des silanes de structure SiR¹R²R³R⁴, où R¹ représente alkoxy, R² et R³ peuvent être identiques ou différents et représentent alkyle, aryl ou alkoxy, et R⁴ représente alkyl ou aryl ou des mélanges de ceux-ci.

6. Séparateur selon l'une des revendications précédentes, les blocs polymères terminaux présentant une température de transition vitreuse (Tg_{E}) supérieure à celle du ou des bloc(s) polymère(s) du milieu (Tg_{M}), et Tg_{E} étant de préférence supérieure à 70 °C et Tg_{M} étant de préférence inférieure à 70 °C et étant d'autre part de préférence inférieure à 20 °C et de façon particulièrement avantageuse inférieure à 0 °C.

7. Séparateur selon l'une des revendications précédentes, le copolymère à blocs présentant un indice de fusion complète selon ISO 1133 de moins de 3 g/10 min à 230 °C (5 kg), de préférence moins de 1 g/ 10 min.

8. Séparateur selon l'une des revendications précédentes, le copolymère à blocs étant par ailleurs choisi de préférence dans le groupe comprenant un copolymère tribloc styrène-isoprène-styrène (SIS), un copolymère tribloc styrène-butène-styrène (SBS), un copolymère tribloc styrène-éthylène/butène-styrène (SEBS), un copolymère tribloc styrène-éthylène/propène-styrène (SEPS), un copolymère à blocs styrène-éthylène-éthylène/propène-styrène (SEEPS), un copolymère à blocs styrène-éthylène/propylène-tert-butylstyrène sulfoné au tert-butylstyrène-éthylène/propylène, un copolymère tribloc de méthacrylate de méthyle-acrylate de butyle-méthacrylate de méthyle, un copolymère tribloc de méthacrylate de méthyle-butadiène-styrène, un copolymère tribloc d'acide acrylique-éthylène-acide acrylique, un copolymère tribloc de méthacrylate de méthyle-oxyde d'éthylèneméthacrylate de méthyle ou des mélanges de ceux-ci, qui peuvent de manière facultative présenter une réticulation transversale.

9. Séparateur selon l'une des revendications précédentes, le séparateur étant un séparateur en porte-à-faux avec une couche poreuse en porte-à-faux, et le module d'élasticité de la couche poreuse en porte-à-faux étant de préférence supérieur à 50 N/mm² et/ou l'allongement à la rupture étant supérieur à 5 %.

10. Séparateur selon l'une des revendications 1 à 8, le séparateur étant appliqué sur un substrat qui est de préférence choisi dans le groupe comprenant des anodes, du matériau d'anode, des cathodes, du matériau de cathode, des matériaux supports poreux tels que des séparateurs microporeux en matière plastique, des non-tissés ou des mélanges.

11. Batterie au lithium-ion, comprenant au moins une anode, au moins une cathode et au moins un séparateur selon l'une des revendications précédentes.

12. Procédé de fabrication d'un séparateur destiné à une cellule électrochimique selon l'une des revendications 1 à 10, comprenant la fabrication d'une couche poreuse, comportant au moins un copolymère à blocs avec trois ou plus de trois blocs polymères, qui représente un élastomère thermoplastique et au moins un oxyde ou un hydroxyde d'aluminium, comprenant les étapes suivantes:
i. mise à disposition d'une composition de revêtement comprenant au moins un solvant, une dispersion de particules d'oxyde ou d'hydroxyde d'aluminium dans ce solvant, ainsi qu'une solution du copolymère à blocs,
ii. application de la composition de revêtement sur un substrat, afin d'obtenir un revêtement sur ce substrat, et
iii. durcissement du revêtement par évaporation du solvant et réticulation transversale facultative du polymère.

13. Procédé selon la revendication 12, le solvant présentant un point d'ébullition d'environ 60 °C à environ 250 °C, choisi de préférence dans le groupe contenant l'eau, des alcools, des esters, des éthers, des cétones, des amides et des solvants aliphatiques et aromatiques, de manière particulièrement avantageuse choisi dans le groupe contenant méthanol, éthanol, isopropanol, n-propanol, butanol, diéthyléther, éther monométhylique du propylène, acétone, méthyléthylcétone, méthylisobutylcétone, acétate d'éthyle, acétate de butyle, n-méthylpyrrolidone, n-éthylpyrrolidone, diméthylacétamide, toluène, xylène, benzène, hexane, heptane, des essences à plage d'ébullition définie, et des mélanges de ceux-ci.

14. Procédé selon la revendication 12 ou 13, les particules d'oxyde ou d'hydroxyde d'aluminium, qui sont utilisées pour la préparation de la suspension, présentant une dimension moyenne des particules comprise dans la plage allant de 50 nm à 2000 nm.
